# EUROPEAN PATENT APPLICATION

(11) **EP 2 610 532 A1**
(43) Date of publication of application: **03.07.2013**
(21) Application number: 11196151.2
(22) Date of filing: 30.12.2011
(51) Int. Cl.: F16J 9/16, F16J 9/24

(54) **Seal unit of a piston of an internal combustion engine**

(71) Applicant: FPT Industrial S.p.A., 10156 Torino (IT)
(72) Inventor: Dellora, Giancarlo, 10134 Torino (IT)
(74) Representative: Cinquantini, Bruno

(57) **Abstract**

The present invention relates to a seal unit (10) suitable to be inserted in the first groove (20') of a piston (20) of an internal combustion engine. The seal unit 10 according to the invention comprises a first ring-shaped body (10') which defines a first cut section (12') and a second ring-shaped body (10") which defines a second cut section (12"). According to the invention such bodies are overlapping so that the position of said first section (12') is different from the position of said second section (12") in relation to a reference axis (101) to which the two bodies (10',10") are coaxial.

## Description

### FIELD OF THE INVENTION

The present invention belongs to the field of the production of internal combustion engines. More precisely, the invention relates to a seal unit of a piston of an internal combustion engine suitable to provide a seal between the combustion chamber and the cylinder block. The present invention relates also to an internal combustion engine comprising a seal unit according to the invention and also to a commercial or industrial vehicle comprising said internal combustion engine.

### DESCRIPTION OF THE PRIOR ART

As it is known, in otto or diesel cycle internal combustion engines, the pressure that develops in the combustion chambers acts directly on the head of the respective pistons, provoking their stroke within the corresponding cylinder. Piston stroke results in a rotation of the crankshaft to which the pistons themselves are connected. Thus the action of the pressure on the pistons results in available torque for the driving shaft.

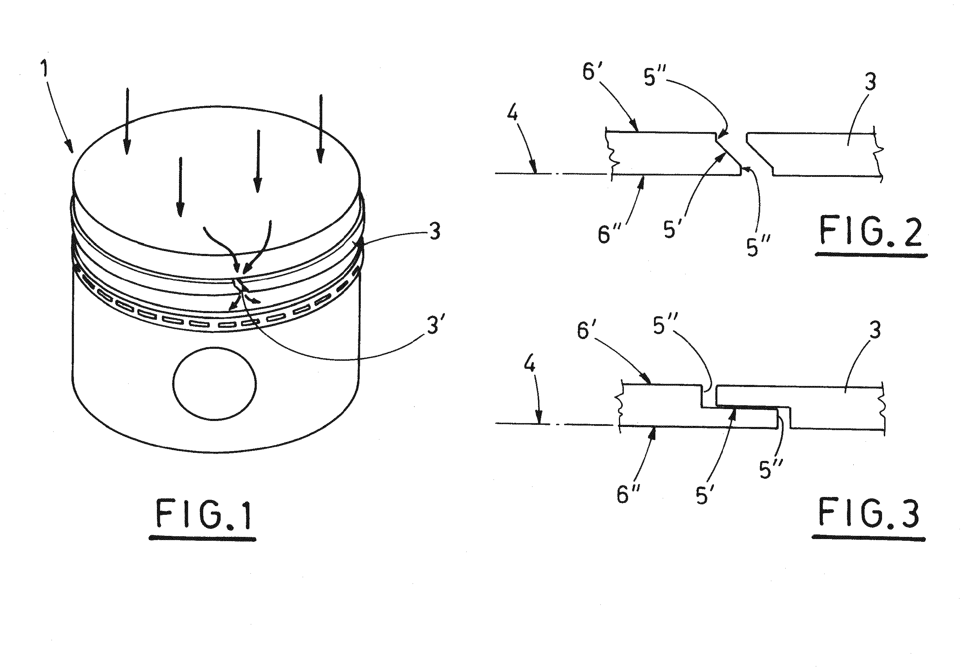

It is also known that, in order to isolate each combustion chamber from the cylinder block, seal rings are usually used, placed in corresponding perimetral grooves defined on the body of the piston. In this regard, figure 1 is a perspective view of a piston 1 comprising a groove within which a seal ring 3 is usually placed. The seal rings usually used are subject to high temperatures and to complex forces both in terms of their intensity and of their direction. For this reason they are interrupted, along their circumference, in correspondence of an interruption section 3' or "cut section" 3'.

The number of seal rings, namely the number of ring-shaped grooves defined in a piston, varies according to the type of engine. In the case of otto cycle engines, for example, at least a first groove and a second groove are defined on the piston, the second groove being in a position below the first one. Thus two seal rings will be provided.

In case of "fast" diesel cycle engines, namely having a speed of rotation of 3000 rpm or above, two grooves are normally provided below the first groove on the pistons. Consequently at least three seal rings will be provided. While in case of "slow" diesel cycle engines, namely having a speed of rotation below 1500 rpm, the number of grooves, in addition to the first one, may be higher or equal to three. Thus in these cases a higher number of rings is provided.

In any case, however, the main function of the seal ring inserted in the first ring-shaped groove (namely the one nearer to the head surface of the piston) of the piston is typically of gas sealing, while the rings in the other grooves (second, third, etc.) may also be of the scraper type or, anyway, may also have further purposes.

Figure 2 and 3 show two different embodiments of seal rings typically inserted in the first ring-shaped groove. In particular, the seal rings shown in such figures show an interruption section (cut) substantially Z-shaped, namely comprising a central portion 5' with a larger extension, and two end portions 5" with a smaller extension developing from opposite sides of the central portion 5'.

More precisely, in the solution of Figure 2, the portion 5' of the cut section develops mainly according to an inclined plane with respect to the horizontal plane 4 where the ring lies, while the two end portions 5" develop according to planes orthogonal to the same horizontal plane 4. While in the solution of Figure 3, the portion 5' of the cut section develops parallel to the horizontal plane 4 where the ring lies, while the two end portions 5" always develop according to planes orthogonal to the same horizontal plane 4.

The two solutions described above (figure 2 and 3), due to the orientation of the different portions defining the cut section, obstruct the passage of gas between the two flat surfaces of the ring (lower surface 6' and upper surface 6" indicated in figures 2 and 3). The cut section is substantially defined according to a "labyrinth" shape, namely it develops according to different planes, incident between each other, in order to obstruct the gas flow towards the cylinder block.

The solutions shown in figures 2 and 3, as well as other similar solutions known in the field, are relatively effective in the field of heat engines used on ships or anyway in those cases where considerable diameters of cylinder/piston are required. These solutions, however, are extremely disadvantageous in case of low power engines, namely in case of diameters (bores) usually below 250 mm. In these applications, due to the reduced dimensions of the seal rings (consequent on the reduced diameter of the pistons) it is extremely difficult to define a cut section having a "labyrinth" structure according to what was described above. This implies, on the one end, an increase of the costs, and, on the other end, a low reliability. In particular it has been observed that in case of engines with reduced bore, the traditional rings have limits both in terms of performance and of fuel consumption. In this sense it has to be noted that an inefficient seal of the gases generated in the combustion chamber results in a decrease of the power available to the driving shaft.

From these considerations, the need for a alternative technical solutions, allowing to overcome the aforementioned limits and the drawbacks connected to the traditional seal rings, emerges. Thus the main task of the present invention is to provide a seal unit for a piston of an internal combustion engine which allows to solve all the drawbacks mentioned above.

In the scope of this task, a first aim of the present invention is to provide a seal unit that is efficient for every type of engine (namely irrespective of their bore). A further aim of the present invention is to provide a seal unit that allows to obtain a higher seal with respect to the traditional solution, namely that allows to reduce/cancel the gas flow from the combustion chamber to the environment of the cylinder block.

Not least, the purpose of the present invention is to provide a seal unit which is reliable and easy to manufacture at competitive costs.

### SUMMARY OF THE INVENTION

The present invention thus relates to a seal unit according to what is stated in claim 1. In particular, the seal unit has an extremely simple structure, obtained by coupling two ring-shaped bodies, each one of them comprising a cut section defined by a plane having a substantially radial section. The overlapping of the two ring-shaped bodies and the offset position (not aligned) of the cut sections of the ring-shaped bodies themselves define as a whole a "labyrinth structure" which allows to obtain an improved seal of the combustion chamber. Unlike the prior art, such labyrinth structure is obtained without complex and precise cutting operations on the ring-shaped bodies, with remarkable advantages in terms of costs and reliability.

### LIST OF THE FIGURES

Further characteristics and advantages will become more evident from the following detailed description of a seal unit according to the present invention, that is shown in a merely illustrative and not limitative form in the attached drawings wherein:
- Figure 1 shows a perspective view of a piston of an internal combustion engine comprising a seal ring of the type known in the art;
- Figures 2 and 3 show schematic views of seal rings of the type known in the art;
- Figure 4 shows an exploded view of a seal unit according to the present invention;
- Figure 5 shows the portion of piston head comprising a seal unit according to the present invention;
- Figure 6 shows a section view of a first embodiment of a seal unit according to the present invention;
- Figures 7, 7A and 7B show section views of further embodiments of a seal unit according to the present invention;
- Figures 8 and 9 show a first possible blocking mode of a seal unit according to the present invention in a first ring-shaped groove of a piston of an internal combustion engine;
- Figures 10 and 11 show a second possible blocking mode of a seal unit according to the present invention in a first ring-shaped groove of a piston of an internal combustion engine;
- Figures 12, 13 and 14 show a further possible blocking modes of a seal unit according to the present invention in a ring-shaped groove of a piston of an internal combustion engine.

In the figures the same reference numbers and letters identify the same elements or components.

### DETAILED DESCRIPTION OF THE INVENTION

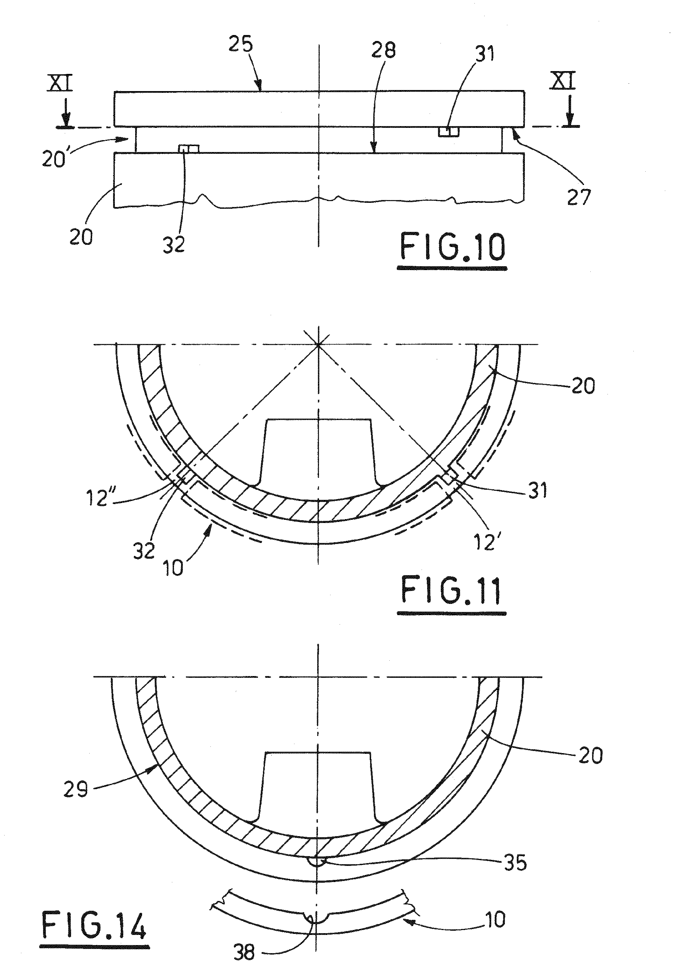

The present invention thus relates to a seal unit 10 suitable to be mounted on a piston of an internal combustion engine. In particular, the seal unit 10 is intended to be operatively placed within a first ring-shaped groove 20' defined on the body 20 of the piston. In particular, the expression "first groove" indicates the ring-shaped groove 20' of a piston that is nearer to the head 25 of the body 20 of the piston itself, as shown in Figure 10.

The seal unit 10 according to the present invention comprises a first ring-shaped body 10' and a second ring-shaped body 10". The first body 10' defines a first cut section 12' which substantially interrupts the continuity of the ring shape. The first cut section 12' is thus defined between two ends 10a of the first ring-shaped body 10'. Such ends 10a may develop on a single plane or may have a "stair-step" shape so that the cut section 12' is defined by portions 14',14" having different width, as described more fully below.

In the same way, the second body 10" defines a second cut section 12" which substantially interrupts the continuity of the ring shape. Also the second cut section 12" is thus defined between two reciprocally facing ends 10b of the second ring-shaped body 10". Also in this case, the ends 10b of the second body 10" may be flat or have a stair-step shape, similarly to the ends 10a of the first body 10'.

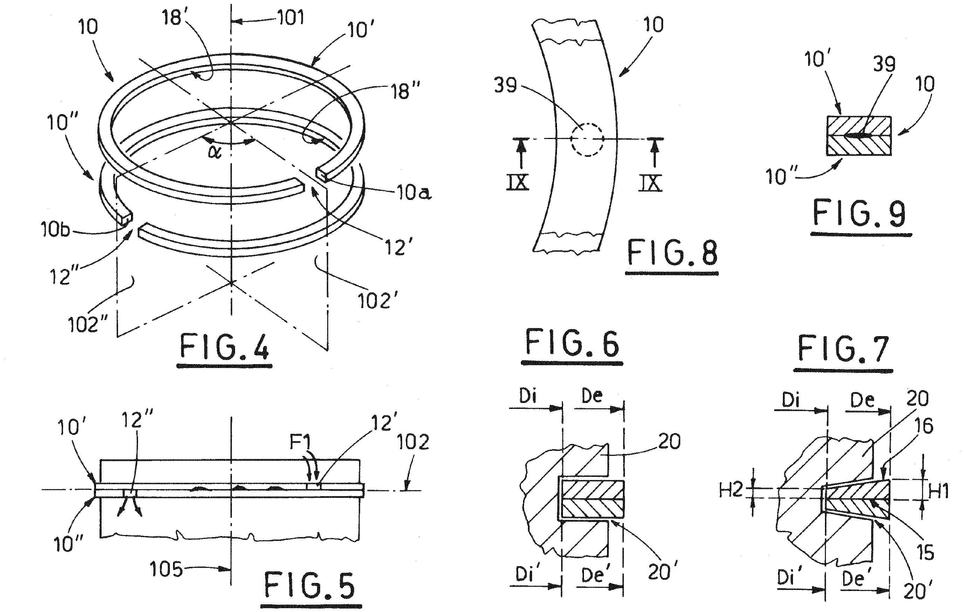

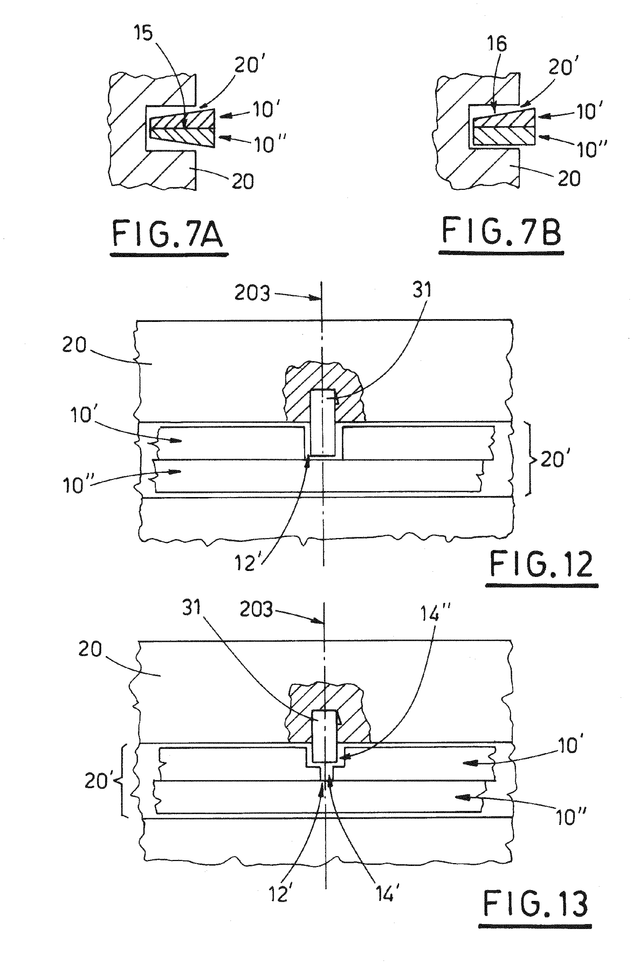

With reference to figures 6 and 7, according to the present invention, the two ring-shaped bodies 10',10" have the same diametral dimensions. This means that the internal diameter Di and the external diameter De of the first ring-shaped body 10' coincide with the internal diameter Di' and the external diameter De' of the second ring-shaped body 10".

According to the present invention, the first body 10' is coupled with the second body 10" so that the two bodies are coaxial with a reference axis 101 shown in Figure 4. The two bodies 10', 10" are in contact on a contact plane 102 (shown in figure 5) substantially orthogonal to said reference axis 101. In particular, according to the invention, the two bodies 10',10" are arranged so that the position of the first cut section 12' of the first body 10' is different from the position of the second cut section 12" of the second body 10". The positions of the sections 12',12" are evaluated with respect to the reference axis 101 defined above.

In other words, the two ring-shaped bodies 10', 10" are arranged so that the two cut sections 12', 12" are not aligned, namely they are not placed on the same plane. By this particular arrangement, the gas flow passing through the first cut section 12' of the first body 10' is advantageously blocked by the second body 10". The overlapping of the two bodies 10',10" and the offset position of the two sections 12',12" define, as a whole, a "labyrinth structure" which allows to obtain a perfect seal of the combustion chamber. Unlike the prior art, such "labyrinth structure" is obtained without complex and precise cutting operations on the ring-shaped bodies.

On the contrary, the first cut section 12' is defined according to a first plane 102' having a substantially radial section, namely containing the reference axis 101 around which the first ring-shaped body 10' develops. In the same way, also the second cut section 12" is defined according to a second plane 102" having a substantially radial section, different from the first plane 201' and containing as well the reference axis 101. It is evident that, in order to obtain such cut sections 12',12", a simple and inexpensive cutting operation is sufficient.

As already mentioned above, in an alternative embodiment shown in Figure 13, the ends 10a,10b of the two ring-shaped bodies 10', 10" may substantially have a "stair-step" shape. Thus the cut sections 12',12", defined by the aforementioned ends 10a,10b, have a symmetrical shape in relation to a respective radial section plane 203 (shown in figure 13) and comprising a first portion 14' with a smaller width and a second portion 14" with larger width. The term "width" means the distance between two symmetrical sides, with respect to said radial section plane 203, of the ends 10a,10b. As described more fully below, a lockpin 31,32 may be inserted in the second portion having larger width, in order to prevent the rotation of the respective ring-shaped body within the first groove 10'.

With reference again to figure 4, the two bodies 10', 10" are preferably arranged so that the angle α between the first 102' and the second 102" radial section plane is comprised in a range between 30° and 180°. The angle α mentioned above is representative of the different position of the cut sections 12',12" of the ring-shaped bodies 10',10"_{.}

With reference to figure 5, the gases (indicated by the arrows F1) generated in the combustion chamber pass through the first cut section 12' of the first body 10', but their passage is obstructed by the presence of the second body 10". In order to reach the second cut section 12", the gases are thus forced to penetrate between the two bodies 10',10" in contact with each other, thus losing their intensity. This aspect results in an advantageous containment of the pressure in the cylinder block and, at the same time, in an increase of the engine performance, since the energy of the gas is not dissipated, but, on the contrary, it is transformed in useful power for the driving shaft. This also implies an advantageous reduction of the fuel consumption, that can be estimated in a range between 1 and 1.5 percentage point.

With reference to Figure 6, according to a first possible embodiment, the first body 10' and the second body 10" have a substantially rectangular-shaped radial section. In particular such rectangular shape is used for low particulate Diesel engines. In this case, the first groove 20' of the piston 20 will have a substantially C-shaped radial section, namely geometrically conjugated to the rectangular radial section of the seal unit 10. The expression "radial section of the seal unit 10" indicates a section evaluated with respect to a plane containing the reference axis 101 and defined by the union of corresponding radial sections of the two bodies 10',10".

With reference to figure 7, according to an alternative embodiment, the first body 10' and the second body 10" have a tapered/trapezoidal shaped radial section defined by a flat side 15 and by an inclined side 16, opposite to the flat one, which develops from a higher height H1, corresponding to the external diameter (De, De') of the two bodies 10',10", up to a lower height H2, corresponding, on the contrary, to the internal diameter Di, Di'. In this case, the two bodies 10', 10" are coupled and are overlapping in correspondence of their flat side 15 in order to define a substantially trapezoidal-shaped radial section for the seal unit 10. This second embodiment is particularly suitable for diesel engines which operate with a MEP (Mean Effective Pressure) higher than 15-16 or which use heavy fuel. In these conditions, indeed, it is necessary to generate a self-cleaning effect between the rings and the groove, which is obtained by micro movements of the rings within the groove. In this sense it has been observed that the trapezoidal shape of the section of the ring-shaped bodies 10', 10" is very effective.

With reference to the figures 7 and 7A in presence of ring-shaped bodies 10', 10" having a trapezoidal section, the first groove 20' of the piston 20 may have a radial section which is also trapezoidal-shaped (shown in figure 7), or, as an alternative, a substantially C-shaped radial section (shown in figure 7A).

In a further possible alternative embodiment shown in figure 7B, the first ring-shaped body 10' may have a tapered/trapezoidal radial section, while the second ring-shaped body 10" may have a rectangular radial section. Also this solution allows to advantageously obtain a self-cleaning effect of the first groove 20' due to the micro movements of the two ring-shaped bodies 10', 10" within the groove itself. In this further case, the first groove 20' of the piston 20 will have a substantially C-shaped radial section in order to follow the micro movements of the ring-shaped bodies 10', 10" according to the aforementioned principles. The two ring-shaped bodies 10',10" of the seal unit 10 may be made of a material usually used for making the seal rings of the traditional type. Furthermore they may be superficially coated, or treated, in order to increase the wear resistance according to methods per se known.

The present invention relates also to a piston for an internal combustion engine comprising a cylindrical body 20 which develops around a longitudinal axis 105 (shown in figure 5) upperly delimited by a head surface 25. Such body 20 comprises at least a first ring-shaped groove 20' defined in a position near such head surface 25. The piston 20 is **characterized in that** it contains a seal unit 10 according to the present invention operatively arranged within the first groove 20'. In this regard, when the seal unit 10 is inserted in the first groove 20', the longitudinal axis 105 of the piston 20 is aligned with the reference axis 101 of the seal unit 10 as shown in figures 4 and 5.

With reference again to figures 6 and 7, as indicated above, the radial section of the first groove 20' of the piston may have a different radial section depending on the geometry of the radial section of the bodies 10', 10" of the seal unit 10. The expression "radial section" of the first groove 20' indicates a section evaluated with respect to a section plane which contains the longitudinal axis 105 of the piston (figure 5).

The first groove 20', for example, may thus have a substantially C-shaped radial section (as shown in figure 6) or, as an alternative, a substantially trapezoidal-shaped radial section (as shown in figure 7).

With reference to figures 8 and 9, according to a first possible embodiment, the bodies 10', 10" of the seal unit 10 may be blocked in their reciprocal operating position within the first groove 20' (not shown in the figures 8 and 9) by means of a mechanical fixing operation, namely for example a spot welding or a pinching. As shown in figure 9, the mechanical fixing operation has substantially the purpose to define some connection areas 39 in correspondence of the contact surfaces of the two ring-shaped bodies 10', 10". Such contact areas 39 prevent the relative displacement of the two bodies 10', 10" within the first groove 20' so that to avoid altering the "labyrinth structure", defined by the bodies themselves, that advantageously ensures the gas seal. For example, in case of welding, the connection areas 39 are defined by areas of fusion material deriving from the welding.

With reference to figures 10 and 11, in an alternative embodiment, the reciprocal position of the two bodies 10', 10" is maintained by means of a first lockpin 31 and of a second lockpin 32 integrally arranged within the first groove 20' of the piston 20. As shown in figure 10, the first lockpin 31 emerges in the first groove 20' from its upper surface 27 towards its lower surface 28. The second lockpin 32 emerges in the first groove 20' in an opposite direction with respect to the first lockpin 31, namely from said lower surface 28 towards said upper surface 27. The two lockpins 31,32 emerge in different angular positions and each one of them corresponds to a cut section 12',12" of one of the ring-shaped bodies 10'10".

Figure 11 is a section view according to the line XI-XI of figure 10 and allows to observe the principle of action of such lockpins 31, 32. More precisely, the first lockpin 31 is intended to be inserted in the first cut section 12' of the first ring-shaped body 10', while the second lockpin 32 is intended to be inserted in the second cut section 12" of the second body 10". Each lockpin 31,32 thus blocks any possible rotation of the corresponding ring-shaped body 10', 10" so that their reciprocal position cannot change, namely it is no longer possible to change "labyrinth structure" that they define.

Figures 12 and 13 show two possible methods of using the lockpins 31, 32. In particular, figure 12 shows a lockpin 31 inserted in a cut section 12' (of one of the two ring-shaped bodies 10', 10") defined according to a radial section plane 203 containing the reference axis 101. In other words the cut section 12' shown in figure 12 is defined by two ends 10a of the ring-shaped body having a flat shape.

Figure 13, instead, shows a lockpin 13 inserted in a cut section 12' defined by the two ends 10a having substantially a stair-step shape. The shape of the two ends defines a cut section 12' comprising a first portion 14' with smaller width and a second portion 14" with larger width as already described above. It has been observed that the "stair-step" shape of the cut section 12', associated to the use of a corresponding lockpin 31, allows not only a firm blocking of the first ring-shaped body 10', but allows also to obtain a more complex labyrinth structure which further obstructs the gas flow towards the second ring-shaped body 10" and thus towards the second cut section 12". This is obviously an advantage in terms of effectiveness of the seal unit 10.

With reference again to figure 13, the considerations mentioned above relating to the first cut section 12' of the first body 10' are to be considered as valid also for the second cut section 12" of the second body 10". In other words, also such cut section may be defined by two ends 10b having a stair-step shape.

With reference again to figure 14, in a further possible embodiment, the reciprocal position of the two ring-shaped bodies 10', 10" is maintained by means of a retain element 35 integral with the first groove 20' and suitable to engage with a corresponding lock slot 38 defined on the internal surface of the ring-shaped bodies 10', 10". In particular, such slot is defined partially on an internal surface 18' (shown in figure 4) of the first body 10', and partially on an internal surface 18" (also shown in figure 4) of the second ring-shaped body 10". As shown in Figure 14, such retain element 35 emerges from a cylindrical bottom surface 29 of the first groove 20' in a substantially radial direction. When the retain element engages with the lock slot 38, both bodies 10',10" are firmly locked within the first groove 20'. Thus the "labyrinth structure" defined by the seal unit 10 keeps a stable configuration.

The present invention relates finally to an internal combustion engine comprising a plurality of cylinders, in each one of them a piston is slidably inserted. Such engine is **characterized in that** in at least one of said cylinders a piston according to the present invention is inserted.

The seal unit according to the invention allows to fulfil the purposes set forth above. In particular, compared to the known solutions, the seal unit according to the invention allows to obtain an improved isolation of the combustion chamber, which results in a lower pollution and in a lower deterioration of the oil. The effective isolation of the combustion chamber obtained by means of the seal unit described above allows also a reduction of the pressure in the cylinder block, and in an increase of the performance and in a decrease of the fuel consumption of the engine itself. At the same time, the seal unit according to the invention allows to advantageously reduce the gas flow rate leaking through the ring-shaped bodies. Such gas, as it is known, need to be filtered in order to separate the oil they contain, before being recirculated towards the intake line. Reducing such gas flow rate results in an advantageous reduction of the complexity and of the costs connected to gas filtering.

The seal unit according to the invention can be subjected to numerous variations or modifications, without departing from the scope of the invention; moreover all the details may be replaced by others that are technically equivalent.

In practice, the material used and also the dimensions and the shapes may be any, according to the needs and to the state of the art.

## Claims

1. Seal unit (10) for a piston of an internal combustion engine suitable to be inserted in a first ring-shaped groove (20') of said piston, **characterized in that** it includes:
- a first ring-shaped body (10') which defines a first cut section (12');
- a second ring-shaped body (10") which defines a second cut section (12"), said second body (10") having diametral dimensions substantially equivalent to the ones of said first body (10'),
said bodies (10',10") being coupled so that they are substantially coaxial to a reference axis (101) and are in contact on a plane (102) substantially orthogonal to said reference axis (101), said bodies (10',10") being reciprocally arranged so that the position of said first section (12') is different from the position of said second section (12"), said positions of said sections (12',12") being evaluated with respect to said reference axis (101).

2. Seal unit (10) according to claim 1, wherein the first body (10') and the second body (10") have a substantially rectangular-shaped radial section, said radial section being evaluated with respect to a plane containing said reference axis (101).

3. Seal unit (10) according to claim 1, wherein the first body (10') and the second body (10") have a tapered-shaped radial section defined by a flat side (15) and by an inclined side (16) opposite to said flat side (15) which develops from a higher height (H1) to a lower height (H2), said radial section being evaluated with respect to a plane containing said reference axis (101).

4. Seal unit (10) according to claim 1, wherein the first body (10') have a tapered-shaped radial section defined by a flat side (15) and by an inclined side (16) opposite to said flat side (15) which develops from a higher height (H1) to a lower height (H2) and wherein said second body (10") has a substantially rectangular-shaped radial section, said radial section of said second body (10") being evaluated with respect to a plane containing said reference axis (101).

5. Seal unit (10) according to any of the claims from 1 to 3, wherein said first cut section (12') develops on a first radial plane (102') containing said reference axis (101) and wherein said second cut section (12") develops in second radial plane (102") containing said reference axis (101).

6. Seal unit (10) according to any of the claims from 1 to 3, wherein said first cut section (12') and said second cut section (12") have a symmetrical shape with respect to a corresponding radial section plane (203), each one of said sections (12',12") comprising a first portion (14') having a smaller width and a second portion (14") having a larger width, said second portion (14") being able to house a corresponding lockpin (31,32) of the corresponding ring-shaped body (10',10").

7. Seal unit (10) according to any of the claims from 1 to 6, wherein said bodies (10',10") have a superficial coating suitable to improve their wear resistance.

8. Seal unit (10) according to any of the claims from 1 to 7, wherein said seal unit (10) comprises a lock slot (38) wherein a retain element (35) integral with said first groove (20') is intended to be engaged, said lock slot (38) being defined partially on an internal surface (18') of said first body (10') and partially on an internal surface (18") of said second body (10").

9. Seal unit (10) according to claim 5 or 6, wherein said two ring-shaped bodies (10', 10") are preferably arranged so that the angle α between the first (102') and the second (102") radial section plane is comprised in a range between 30° and 180°.

10. Piston for a combustion engine, said piston comprising a cylindrical body (20) which develops around a longitudinal axis (105), said cylindrical body (20) being upperly delimited by a head surface (25) and comprising a first groove (20') in a position near said head surface (25), **characterized in that** it comprises a seal unit (10) according to any of the claims from 1 to 9 inserted in said first groove (20').

11. Piston according to claim 10, wherein said first groove (20') has a substantially C-shaped radial section, evaluated with respect to a plane containing said longitudinal axis (105).

12. Piston according to claim 10, wherein said first groove (20') has a substantially trapezoidal radial section, evaluated with respect to a plane containing said longitudinal axis (105).

13. Piston according to any of the claims from 10 to 12, wherein, after inserting said seal unit (10) in said first groove (20'), said bodies (10',10") of said seal unit (10) are reciprocally blocked by means of a mechanical fixing operation.

14. Piston according to one of the claims from 10 to 12, wherein said first groove (20') comprises a first lockpin (31) and a second lockpin (32) which emerge within the groove itself in order to insert respectively in said first cut section (12') of said first body (10') and in said second cut section (12") of said second body (10") in order to prevent the relative displacement of said bodies (10',10").

15. Piston according to any of the claims from 10 to 12, wherein said piston comprises a retain element (35) which emerges within the groove itself in order to engage with a lock slot (38) defined partially on an internal surface (18') of said first body (10') and partially on an internal surface (18") of said second body (10").

16. Internal combustion engine comprising a plurality of cylinders in each one of them a piston is slidably inserted, said engine being **characterized in that** in at least one of said cylinders a piston according to any of the claims from 10 to 15 is inserted.

17. Industrial or commercial vehicle comprising an internal combustion engine according to claim 16.
